Europäisches Patentamt

European Patent Office

Office européen des brevets

(19)

(11) Veröffentlichungsnummer: **0 320 688 B1**

(12) # EUROPÄISCHE PATENTSCHRIFT

(45) Veröffentlichungstag der Patentschrift: **03.02.93**

(51) Int. Cl.5: **H04B 10/24**, G02F 1/21

(21) Anmeldenummer: **88119834.5**

(22) Anmeldetag: **28.11.88**

(54) Reflektionssende- und Empfangseinrichtung für ein bidirektionales LWL-Kommunikationssystem.

(30) Priorität: **15.12.87 DE 3742504**

(43) Veröffentlichungstag der Anmeldung:
**21.06.89 Patentblatt 89/25**

(45) Bekanntmachung des Hinweises auf die
Patenterteilung:
**03.02.93 Patentblatt 93/05**

(84) Benannte Vertragsstaaten:
**AT BE CH DE FR GB IT LI NL SE**

(56) Entgegenhaltungen:
**WO-A-87/06084**

**PROCEEDINGS OF THE FOURTH EUROPEAN
CONFERENCE ON INTEGRATED OPTICS
ECIO, 11.-13. Mai 1987, Seiten 44-46, SETG
LTD, Glasgow, GB; A. BRULAND et al.:
"Reflection mode integrated optical Fabry-
Perot modulator"**

**OPTICS COMMUNICATIONS, Band 55, Nr. 5,
1. Oktober 1985, Seiten 316-318, Elsevier
Science Publishers B.V., Amsterdam, NL;
M.M. STALLARD et al.: "Design considerations and analysis of velocity mismatch effects in an electrooptic Fabry-Perot modulator"**

(73) Patentinhaber: **SIEMENS AKTIENGESELL-
SCHAFT
Wittelsbacherplatz 2
W-8000 München 2(DE)**

(72) Erfinder: **Kindt, Stefan, Dr.rer.nat., Dipl-Phys.
Buchendorferstrasse 25
W-8000 München 71(DE)**

**Beschreibung**

In einem mit einem Monomode-Lichtwellenleiter gebildeten bidirektionalen Kommunikationssystem ist es möglich, (eine) Lichtquelle(n) nur an einem Ende der LWL-Strecke und Reflektionsmittel sowie einen optischen Modulator am anderen Ende der LWL-Strecke vorzusehen (US-A-4 195 269, insbes. Sp.2, Z.32...44 und 51...55; DE-A-2 708 606; WO-A-87/06084, insbes. S.7, 32, ...S8, Z.11, S.8, Z.22-31, Fig.3; ELECTRONICS LETTERS 22(1986)9, 479...481, und 10, 517...518).

Ein optischer (Intensitäts-)Modulator kann mit einem steuerbaren optischen Richtkoppler ausgebildet sein (telcom report 10(1987)2, 90...98, Bilder 8 und 9; WO-A-87/06084, FIG.3). Ein solcher optischer Richtkoppler weist zwei gleichartige optische Streifenwellenleiter - das sind durch Eindiffusion (z.B. von Titan in Lithiumniobat) in einem Substrat erzeugte schmale dünne Streifen, die eine größere optische Brechzahl als das Substrat haben, - auf, die über eine bestimmte Länge eng (in einem Abstand von typisch 5 $\mu$m) nebeneinander geführt sind, so daß sich die optischen Felder von in den Streifenwellenleitern geführten Wellen überlappen und, mit der sog. Koppellänge periodisch wiederholt, Lichtenergie vom jeweils einen auf den jeweils anderen Streifenwellenleiter übergekoppelt wird; zwischen und neben den Streifenwellenleitern sind Elektroden vorgesehen, und zwischen diesen Elektroden erzeugte äußere elektrische Felder führen zu Änderungen des Brechungsindex' (sog. elektrooptischer Effekt) und damit der Ausbreitungsgeschwindigkeit und der Streuung mit der Folge, daß es auch zu entsprechenden Änderungen in der Lichtenergieüberkopplung kommt.

Die Erfindung stellt sich nun die Aufgabe, für ein bidirektionales LWL-Kommunikationssystem mit (einer) Lichtquelle(n) nur an einem Ende der LWL-Strecke einen Weg zu einer besonders zweckmäßigen Ausbildung einer Reflektionssende- und Empfangseinrichtung aufzuzeigen.

Es wurde in diesem Zusammenhang für ein bidirektionales LWL-Kommunikationssystem mit (einer) vorzugsweise durch (einen) Laser gebildeten Lichtquelle(n) nur an einem Ende des Lichtwellenleiters bereits ein Reflektionssender angegeben, der durch einen an seinem einen Ein-/Ausgang an den Lichtwellenleiter angeschlossenen halbierten steuerbaren optischen Richtkoppler gebildet ist, dessen beide Streifenwellenleiter mit einem teildurchlässigen Spiegel abgeschlossen sind und dessen Steuerelektroden mit dem Sendesignal beaufschlagt sind, wobei hinter dem teildurchlässigen Spiegel ein von beiden Streifenwellenleitern mit dem Empfangs-Lichtsignal beaufschlagter optoelektrischer Wandler vorgesehen sein kann (EP-A-0 301 388, veröffentlicht am 01.02.89).

Die Erfindung zeigt demgegenüber einen anderen Weg zu einer besonders zweckmäßigen Ausbildung einer Reflektionssende- und Empfangseinrichtung.

Die Erfindung betrifft eine Reflektionssende- und Empfangseinrichtung für ein bidirektionales LWL-Kommunikationssystem mit einer) vorzugsweise durch (einen) Laser gebildeten Lichtquelle(n) nur an einem Ende des Lichtwellenleiters; diese Reflektionssende und Empfangseinrichtung ist erfindungsgemäß dadurch gekennzeichnet, daß hinter einem dem Lichtwellenleiter abgewandten zweiten teildurchlässigen Spiegel eines elektrisch steuerbaren, integriert-optischen Fabry-Perot-Resonators, der an seinem durch einen ersten teildurchlässigen Spiegel gebildeten einen Ein-/Ausgang an den Lichtwellenleiter angeschlossen ist und dessen Steuerelektroden mit dem Sendesignal beaufschlagt sind, ein über den Streifenwellenleiter mit dem Empfangs-Lichtsignal beaufschlagter optoelektrischer Wandler vorgesehen ist.

Es sei an dieser Stelle bemerkt, daß es bekannt ist, Fabry-Perot-Resonatoren bzw. -Interferometer - es sind dies Anordnungen mit zwei zueinander parallelen Reflektoren (Spiegeln), zwischen denen resonanzartig Licht hin und her reflektiert wird, wobei zumindest einer der beiden Spiegel teildurchlässig ist, so daß dort Licht hindurchtreten kann, - zu Längenmessungen zu verwenden, indem mindestens einer der beiden Reflektoren beweglich ausgebildet und der Reflektorabstand mit der zu messenden Länge bzw. Längenänderung verknüpft wird, so daß die Lichttransmission dann periodisch vom Reflektorabstand abhängt (DE-A1-30 44 183).

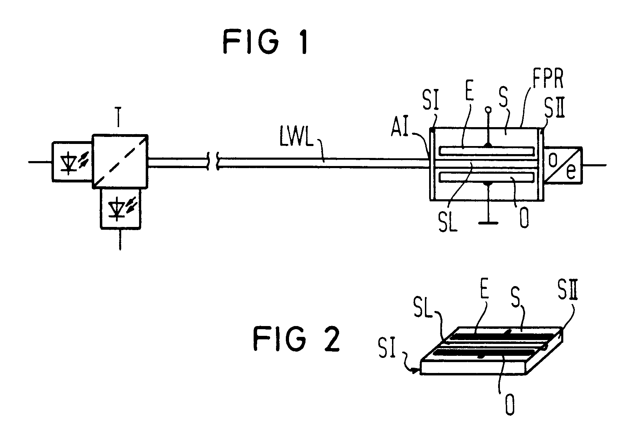

Es sei außerdem bemerkt, daß es auch prinzipiell bekannt ist, einen elektrooptischen Fabry-Perot-Modulator als Reflektionsmodulator auszubilden (Proc. ECIO'87, S.44...47, insbes. S.45, Z.12...30 und Fig.1; OPTICS COMMUNICATIONS 55(1985)5, 316...318, insbes. S.316, r.Sp., Z.8, ... S.317, 1.Sp., Z.4, und Fig.1a). Probleme einer bidirektionalen Kommunikation bleiben dabei unberührt; hierzu zeigt aber die Erfindung einen Weg.

Die Erfindung bringt, verbunden mit dem Vorteil einer einfachen Struktur des Reflektionssenders - der integriert-optische Baustein besteht nur aus einem linearen Wellenleiterabschnitt und zwei polierten und beschichteten Stirnflächen -, den weiteren Vorteil mit sich, daß zu seiner Herstellung keine großen Anforderungen an die Photolithographie gestellt werden, daß der Platz- und Materialbedarf gering ist und daß man herstellungstechnologisch weitgehend auf schon existierende integriert-optische Phasenmodulatoren (s. telcom report a.a.O., Bild 6) zurückgreifen kann, wobei dann die Antireflex-Vergütung der Stirnflächen durch eine Reflektionsschicht zu ersetzen ist; eine sehr kostengünstige Herstellung des Reflektionssenders gemäß der Erfindung ist daher abzusehen. Von Vorteil ist außerdem, daß man zum Schalten des Reflektionssenders vom Zustand maximaler Reflektion in den Zustand maximaler Transmission für TE-Wellen mit Steuerspannungen bis zu 3 V auskommen kann; selbst wenn neben einer elektrischen auch eine thermische Arbeitspunktstabilisierung (über ein Peltier-Element) vorgesehen wird, so sind insgesamt nur geringe Ströme notwendig, da in dem Reflektionssender gemäß der Erfindung keine nennenswerte elektrische Verlustleistung auftritt.

Weitere Besonderheiten der Erfindung werden aus der nachfolgenden näheren Erläuterung eines Ausführungsbeispiels anhand der Zeichnung ersichtlich.

Die Zeichnung zeigt in FIG 1 schematisch ein Ausführungsbeispiel einer Reflektionssende- und Empfangseinrichtung gemäß der Erfindung mit einem elektrisch steuerbaren, integriert-optischen Fabry-Perot-Resonator FPR, der an seinem einen Ein-/Ausgang AI an einen Lichtwellenleiter LWL angeschlossen ist; dieser Lichtwellenleiter LWL möge Bestandteil eines bidirektionalen LWL-Kommunikationssystems sein und dazu, wie dies auch in FIG 1 angedeutet ist, an seinem einen Ende einen Sender mit einem elektrooptischen Wandler, beispielsweise einer Laserdiode, und einen Empfänger mit einem optoelektrischen Wandler, beispielsweise einer pin-Diode, aufweisen, die über einen Strahlteiler T mit dem Lichtwellenleiter LWL verbunden sind. An seinem in der Zeichnung dargestellten anderen Ende weist das bidirektionale LWL-Kommunikationssystem als Sender keine eigene Lichtquelle auf, sondern einen durch den integriert-optischen Fabry-Perot-Resonator FPR gebildeten Reflektionssender, der durch ein zu dem genannten einen Ende des bidirektionalen LWL-Kommunikationssystem hin zu übertragendes Sendesignal modulierbar ist.

Der in FIG 2 auch gesondert skizzierte elektrisch steuerbare integriert-optische Fabry-Perot-Resonator FPR weist einen in ein Substrat S, z.B. Lithiumniobat, eindiffundierten linearen optischen Monomode-Streifenwellenleiter SL auf; dabei sind die Stirnflächen des $LiNbO_3$-Kristalls senkrecht zum Wellenleiter durch Polieren auf optische Qualität gebracht und mit einer teildurchlässigen dielektrischen Verspiegelung SI, SII versehen. Der optische Wellenleiter SL und die verspiegelten Stirnflächen SI, SII bilden zusammen den optischen Resonator. Die eine teildurchlässige Verspiegelung SI bildet einen Ein-/Ausgang AI, an dem der integriert-optische Resonator FPR an den Lichtwellenleiter LWL angeschlossen ist; hinter dem anderen teildurchlässigen Spiegel SII ist der z.B. mit einer pin-Diode realisierte optoelektrische Wandler o/e eines in weiteren Einzelheiten nicht mehr dargestellten Empfängers angeordnet. Parallel zum linearen optischen Wellenleiter SL sind Steuerelektroden E, O z.B. aus Aluminium aufgedampft; durch Anlegen einer elektrischen Spannung an diese Elektroden ist es möglich, vermittels des elektro-optischen Effekts den Bre-chungsindex des $LiNbO_3$-Kristalls und somit die optische Weglänge zwischen den beiden verspiegelten Stirnflächen SI, SII des Resonators FPR zu verändern. Diese Elektroden E, O sind mit einem über den Lichtwellenleiter LWL zu übertragenden Sendesignal, beispielsweise einem 140-Mbit/s-Signal, beaufschlagt.

Im Fabry-Perot-Resonator bzw. -Interferometer FPR wird an jeder Stirnfläche SI, SII (je nach dem Reflexionskoeffizienten der aufgedampften Verspiegelung) ein Teil der auftreffenden optischen Welle reflektiert, und der Rest wird transmittiert. Hinter den Stirnflächen SI, SII überlagern sich dabei die Amplituden der direkt transmittierten Wellenzüge mit den Amplituden solcher Wellenzüge, die zuvor ein- oder mehrmals im Resonator hin und her reflektiert worden sind. Je nach der relativen Phasenlage kommt es dabei zu einer gegenseitigen Auslöschung (destruktive Interferenz) oder zu einer Addition (konstruktive Interferenz) der sich überlagernden Wellenzüge:

Entspricht z.B. die optische Weglänge zwischen den verspiegelten Stirnflächen SI, SII genau einem geradzahligen Vielfachen der viertel Wellenlänge des benutzten Lichtes, so erfährt das in der Vorwärtsrichtung vom Lichtwellenleiter LWL zum optoelektrischen Wandler o/e übertragene Licht eine konstruktive Interferenz mit der Folge, daß kein Licht zurück zum Lichtwellenleiter LWL reflektiert wird; im Idealfall eines verlustfreien Resonators (keine Ausbreitungsverluste im Wellenleiter, keine Streuverluste an den Spiegeln) wird in diesem Fall das gesamte Licht transmittiert.

Entspricht die optische Weglänge zwischen den Spiegeln SI, SII genau einem ungeradzahligem Vielfachen der viertel Wellenlänge, so ergibt sich in der Vorwärtsrichtung eine gegenseitige Lichtwellenauslöschung und für die Rückrichtung zurück zum Lichtwellenleiter LWL eine konstruktive Interferenz, so daß ein Maximum an Licht zurück zum Lichtwellenleiter LWL gelangt.

Der in der Zeichnung skizzierte Reflektionssender arbeitet dann wie folgt: Ein von der Gegenseite des LWL-Kommunikationssystems her über den Monomode-Lichtwellenleiter LWL übertragenes (z.B. 680-Mbit/s-) Lichtsignal vorzugsweise niedrigen Modulationsgrads (z.B. 10%) tritt am Ein-/Ausgang AI in einer dem Transmissionsgrad der Stirnfläche SI entsprechenden Intensität in den Streifenwellenleiter SL ein, und der dem Transmissionsgrad des teildurchlässigen Spiegels SII von beispielsweise etwa 40 % entsprechende Anteil des im Streifenwellenleiter SL geführten Empfangs-Lichtsignals tritt durch den teildurchlässigen Spiegel SII hindurch und gelangt zu dem dahinterliegenden optoelektrischen Wandler o/e.

Der nicht zum optoelektrischen Wandler o/e gelangte, dem Reflektionsgrad des teildurchlässigen Spiegels SII von im Beispiel etwa 40 % entsprechende Anteil des im Streifenwellenleiter SL geführten Lichts wird am teildurchlässigen Spiegel SII reflektiert und gelangt zurück zum teildurchlässigen Spiegel SI, um dort seinerseits teils transmittiert, teils reflektiert zu werden; für das so reflektierte Licht wiederholen sich diese Vorgänge in entsprechender Weise.

Dabei wirkt sich die von der an den Steuerelektroden E, O anliegenden Sendesignalspannung abhängige Interferenz zwischen den vom Spiegel SI transmittierten Lichtwellenzügen als eine Intensitätsmodulation (vorzugsweise mit hohem Modulationsgrad (z.B. 100%)) des Lichts aus, das über den Ein-/Ausgang AS des Streifenwellenleiters SL wieder zurück in den Lichtwellenleiter LWL gelangt, wo es dann in Rückrichtung zu dem anderen Ende des LWL-Kommunikationssystems hin übertragen wird. Je nach dem Momentanwert des Sendesignals kann dabei im einen Grenzfall (bei konstruktiver Interferenz) das Licht in maximaler Intensität zurück über den Lichtwellenleiter LWL übertragen werden, und im anderen Grenzfall (bei destruktiver Interferenz) kann es zu einer vollständigen Auslöschung dieses Lichts kommen. Im allgemeinen, nämlich bei zwischen den Grenzwerten liegendem Momentanwert des Sendesignals, wird man sich zwischen den beschriebenen Grenzfällen bewegen.

Bei verlustfreiem Resonator ergeben sich beim Verändern der optischen Weglänge zwischen den Spiegeln SI, SII Reflexions- bzw. Transmissionsmaxima, die umso schärfer ausgeprägt sind, je höher der Reflexionsgrad der benutzten Spiegel ist. Ein optimaler Modulationshub ergibt sich in diesem Fall bei dem höchsten möglichen Reflexionsgrad der verspiegelten Stirnflächen ($R \approx 100$ %).

Aufgrund von Ausbreitungsverlusten der Lichtwelle im Ti:LiNbO$_3$-Wellenleiter ($\alpha \approx 0,2$ dB cm$^{-1}$) und von Streuverlusten an den verspiegelten Stirnflächen SI, SII ist der Resonator in der Praxis nicht verlustfrei. Dieses hat bei einem geschätzten Gesamtverlust von etwa 15% pro Facette einen maximalen Modulationshub bei einem Reflexionsgrad von ca. 40 % zur Folge.

Um Unabhängigkeit von der Polarisationsrichtung des über den Lichtwellenleiter LWL ankommenden Lichtes zu erreichen, kann für ein LiNbO$_3$-Substrat, in dem die Streifenwellenleiter SLI, SLII durch Eindiffusion von Titan gebildet werden, ein spezieller Schnitt des LiNbO$_3$-Kristalls verwendet werden, für den die elektrooptischen Koeffizienten für TE- und TM-Moden gleich sind.

Ein bevorzugtes Ausführungsbeispiel eines integriert-optischen Reflexionssende-Empfangs-Bausteins gemäß der Erfindung hat die folgenden Merkmale:

Baulänge ca. 15 mm
Gesamtverlust ca. 15 % pro Facette
Kristallschnitt entlang der kristallographischen X-Achse
Wellenleiter entlang der kristallographischen Y-Achse
Reflexionsgrad der Verspiegelung ca. 40 %
Sendesignalspannung $U_{St} \leqq 3$ V

```
Transmittierte optische                    )  der eingekoppelten
              Leistung:  10 % - 56 % )  optischen Leistung,
Reflektierte optische                      )  je nach der angelegten
              Leistung:   0 % - 46 % )  Sendesignalspannung
```

Der Arbeitspunkt des Reflexionssender-Bausteins kann durch Unterlegen der Sendesignalspannung mit einer Gleichspannung eingestellt werden. Da die durch die Sendesignalspannung hervorgerufene Amplitudenmodulation des zum Lichtwellenleiter LWL reflektierten Lichtes sich auch im zum optoelektrischen Wandler o/e transmittierten optischen Signal niederschlägt, kann man auch einen Teil des beim Teilnehmer empfangenen Signals benutzen, um den FPR-Baustein über eine Regelschaltung im optimalen Arbeitspunkt zu stabilisieren. Sofern der FPR-Baustein starken Temperaturschwankungen ausgesetzt ist, kann auch eine kombinierte thermische und elektrische Regelung den Arbeitspunkt des Bausteins stabilisieren. Hierbei kann die elektronische Regelung schnelle Störungen und die thermische Regelung (mittels eines Peltier-Elements) Langzeitdriften ausgleichen.

Für die bidirektionale Datenübertragung über eine Faser sollen sich die Datenraten für die beiden Übertragungsrichtungen deutlich voneinander unterscheiden, damit ein vorhandenes Übersprechen zwischen Hinkanal und Rückkanal durch eine elektronische Filterung eliminiert werden kann.

Diese Voraussetzung ist zum Beispiel bei einem Teilnehmeranschluß eines Breitband-ISDN (mit Verteildiensten) gegeben: Ein Laser-Sender im Amt sendet ein 680-MBaud-Signal mit einem Modulationsgrad von 10 % über einen Monomode-Lichtwellenleiter LWL durch den Fabry-Perot-Resonator FPR hindurch zum optischen Empfangselement o/e des Teilnehmers. Je nach der an den Fabry-Perot-Resonator FPR angelegten Teilnehmer-Sendesignalspannung gelangen zwischen 10 % und 56 % der in den Fabry-Perot-Resonator FPR eingekoppelten Leistung zum optoelektrischen Wandler o/e des Teilnehmers. Zum Senden von Daten vom Teilnehmer zum Amt wird der Fabry-Perot-Resonator FPR zwischen dem reflektierenden und dem transmittierenden Zustand hin und her geschaltet, so daß das zum Amt zurückreflektierte Licht eine Datenrate von 140 MBaud mit einem Modulationsgrad von ca. 100 trägt, dem das von der Gegenseite des LWL-Kommunikationssystems empfangene Lichtsignal vorzugsweise niedrigen Modulationsgrads als eine geringfügige hochfrequente Störung überlagert ist.

## Patentansprüche

1. Reflektionssende- und Empfangseinrichtung für ein bidirektionales LWL-Kommunikationssystem mit (einer) vorzugsweise durch (einen) Laser gebildeten Lichtquelle(n) nur an einem Ende des Lichtwellenleiters,

   **dadurch gekennzeichnet,**

   daß hinter dem dem Lichtwellenleiter (LWL) abgewandten teildurchlässigen Spiegel (SII) eines elektrisch steuerbaren, integriert-optischen Fabry-Perot-Resonators (FPR), der an seinem durch einen teildurchlässigen Spiegel (SI) gebildeten einen Ein-/Ausgang (AI) an den Lichtwellenleiter (LWL) angeschlossen ist und dessen Steuerelektroden (E,O) mit der Sendesignalquelle verbunden sind, ein über den Streifenwellenleiter mit dem Empfangs-Lichtsignal beaufschlagter optoelektrischer Wandler (o/e) vorgesehen ist.

2. Reflektionssende- und Empfangseinrichtung nach Anspruch I,

   **dadurch gekennzeichnet,**

   daß der elektrisch steuerbare, integriert-optische Fabry-Perot-Resonator (FPR) durch einen in ein Lithiumniobat-Substrat (S) eindiffundierten linearen Streifenwellenleiter (SL) mit teildurchlässigen verspiegelten Stirnflächen (SI, SII) und parallel zum Streifenwellenleiter (SL) angeordneten Steuerelektroden (E,O) gebildet ist.

## Claims

1. Reflection transmitter and receiver arrangement for a bidirectional optical waveguide communications system having one or more light sources preferably formed by one or more lasers only at one end of the optical waveguide, characterised in that downstream of the partially reflecting mirror (SII), averted from the optical waveguide (LWL), of an electrically controllable integrated-optical Fabry-Perot resonator (FPR), which is connected to the optical waveguide (LWL) at its input/ output (AI) formed by a partially reflecting mirror (SI), and whose control electrodes (E,O) are connected to the transmission signal source, there is provided an optoelectric transducer (o/e) to which the received light signal is applied via the strip waveguide.

2. Reflection transmitter and receiver arrangement according to Claim 1, characterised in that the electrically controllable integrated-optical Fabry-Perot resonator (FPR) is formed by a linear strip waveguide (SL) diffused into a lithium niobate substrate (S) and having partially reflecting silvered end faces (SI, SII) and control electrodes (E,O), arranged parallel to the strip waveguide (SL).

## Revendications

1. Dispositif émetteur-récepteur à réflexion pour un système bidirectionnel de communication à guides d'ondes LWL, comportant une ou des sources de lumière, constituées de préférence par un ou des lasers, uniquement à une extrémité des guides d'ondes optiques,

   caractérisé par le fait

   qu'en arrière du miroir partiellement transparent (SII), qui est tourné à l'opposé du guide d'ondes optiques (LWL), d'un résonateur de Fabry-Perot (FPR) optique intégré, commandable électriquement, dont une entrée/sortie (AI) formée par un miroir partiellement transparent (SI) est raccordée aux guides d'ondes optiques (LWL) et dont les électrodes de commande (E,O) sont raccordées à la source de signaux d'émission, il est prévu un convertisseur optoélectronique (o/e) chargé par l'intermédiaire du guide d'ondes en forme de bande, par le signal lumineux de réception.

2. Dispositif émetteur-récepteur à réflexion suivant la revendication 1, caractérisé par le fait que le résonateur de Fabry-Perot (FPR) à optique intégré, commandable électriquement, est formé par un guide d'ondes linéaire en forme de bande (SL), formé par diffusion dans un substrat (S) en niobate de lithium et possédant des surfaces frontales métallisées partiellement transparentes (SI,SII) et avec des électrodes de commande (E,O) parallèles au guide d'ondes en forme de bande (SL).

# FIG 1

# FIG 2